**Europäisches Patentamt**

**European Patent Office**

**Office européen des brevets**

(19)

(11) Veröffentlichungsnummer: **0 133 886**
**B1**

(12) # EUROPÄISCHE PATENTSCHRIFT

(45) Veröffentlichungstag der Patentschrift:
**07.01.88**

(51) Int. Cl.⁴: **A 01 D 41/14**

(21) Anmeldenummer: **84106910.7**

(22) Anmeldetag: **16.06.84**

(54) Regelvorrichtung für die Erntebergungsvorrichtung einer Erntemaschine.

(30) Priorität: **01.07.83 US 509882**

(43) Veröffentlichungstag der Anmeldung:
**13.03.85 Patentblatt 85/11**

(45) Bekanntmachung des Hinweises auf die Patenterteilung:
**07.01.88 Patentblatt 88/1**

(84) Benannte Vertragsstaaten:
**BE DE FR GB IT SE**

(56) Entgegenhaltungen:
**EP - A - 0 048 127**
**DE - A - 2 910 139**
**US - A - 4 171 606**

(73) Patentinhaber: **DEERE & COMPANY, 1 John Deere Road, Moline Illinois 61265 (US)**

(72) Erfinder: **Soots, Daniel Lee, 1687 35th Avenue, East Moline Illinois 61244 (US)**
Erfinder: **Beckman, Eugene Jonas, 806 36th Street, Moline Illinois 61265 (US)**

(74) Vertreter: **Feldmann, Bernhard et al, DEERE & COMPANY European Office, Patent Department Steubenstrasse 36-42 Postfach 503, D-6800 Mannheim 1 (DE)**

ACTORUM AG

## Beschreibung

Die Erfindung bezieht sich auf eine Regelvorrichtung für die Erntebergungsvorrichtung einer Erntemaschine mit einer einen elektrisch steuerbaren Hubteil und einen elektrisch steuerbaren Absenkteil aufweisenden Stellvorrichtung zur Verschwenkung der Erntebergungsvorrichtung, die mit einer Aufsammeleinrichtung und einem Einzugsteil ausgerüstet ist, an dem die über Laufräder auf dem Boden abstützende Aufsammeleinrichtung mit ihrem nachlaufenden Ende über eine quer verlaufende Achse an das vordere Ende des Einzugsteiles gelenkig und höhenverschwenkbar angeschlossen ist, wobei die Seitenteile der Aufsammeleinrichtung torsionsartig verdrehbar ausgebildet sind und hierzu zwischen ihnen und dem Einzugsteil mindestens ein elektrischer, über Bodenberührungsglieder des Einzugsteiles betätigbarer Drehschalter als Stellvorrichtung vorgesehen ist, über den Schaltimpulse an die elektrohydraulisch betätigbare Steuereinrichtung zur Lageveränderung des Einzugsteiles gegenüber der Aufsammeleinrichtung geleitet werden, und wobei der Drehschalter einen an eine Stromversorgungseinrichtung anschliessbaren Eingangskontakt und mehrere mit Abstand zueinander angeordnete, mit den Hub- und Absenkteilen in Wirkverbindung bringbare Ausgangskontakte aufweist.

Es ist bereits eine Vorrichtung für Mähdrescher zum Steuern der Höhenlage einer Schneidwerksvorrichtung bekannt (EP-A 0 048 127), die an zahlreichen nebeneinander angeordneten Lenkern gelagert ist. Die einzelnen Lenker zur Aufnahme der flexibel ausgebildeten Schneidwerksvorrichtung lagern an einer Sensorwelle, die in Halterungen der Erntebergungsvorrichtung aufgenommen ist. Am einen Ende der Sensorwelle ist ein Schalthebel fest angeordnet, der mit einem Drehschalter verbunden ist. Die durchgehende Welle zur Aufnahme der einzelnen höhenverschwenkbaren Lenker wird jeweils dann verstellt, wenn ein einzelner Lenker seine Höhenlage verändert, und zwar unabhängig von der Lage der übrigen Lenker, so dass jeweils eine Anpassung der Höhenlage der Erntebergungsvorrichtung erfolgt, wenn ein einzelner Lenker einen Schaltimpuls auslöst.

Es ist ein Mähdrescher mit einer Erntebergungsvorrichtung bekannt (US-A 4 171 606), die mit einem Einzugsteil und einer daran schwenkbar angeschlossenen Bandaufsammeleinrichtung ausgerüstet ist; die Aufsammeleinrichtung ist mit ihrem hinteren Ende gelenkig an den Einzugsteil angeschlossen, während sie sich über Laufräder auf dem Boden abstützt. Die Bandaufsammeleinrichtung besteht aus parallel zueinander verlaufenden Seitenteilen, die über die Achsen der Rollen eines Förderbandes miteinander verbunden sind, wobei eine gegenseitige Verstellung der Seitenteile möglich ist. Der Bandaufsammeleinrichtung sind beiderseits Sensoren zugeordnet, die zwischen der Bandaufsammeleinrichtung und dem Einzugsteil wirken und dazu beitragen, eine Stellvorrichtung derart zu beeinflussen, dass die Lage der Bandaufsammeleinrichtung konstant gehalten wird, ohne dass eine übermässige Beanspruchung des Förderbandes auftritt. Da jedem Seitenteil ein elektrischer Sensor zugeordnet ist, muss auch jedem Sensor eine elektrische Schaltvorrichtung für den Absenkstromkreis und auch für den Anhebestromkreis zugeordnet sein, so dass sich eine sehr aufwendige Schaltvorrichtung ergibt, die zu einer Verteuerung der gesamten Regelvorrichtung führt.

Demgegenüber liegt der Erfindung die Aufgabe zugrunde, die automatische Regelvorrichtung für die Erntebergungsvorrichtung mit daran angeschlossener Bandaufsammeleinrichtung derart auszubilden und anzuordnen, dass mit lediglich einem Sensor bzw. Schaltelement zur Beeinflussung der elektro-hydraulischen Steuervorrichtung ausgekommen werden kann. Diese Aufgabe ist durch die im kennzeichnenden Teil des Anspruches 1 aufgeführten Merkmale gelöst. Durch die vorteilhafte Anordnung eines einzigen Drehschalters auf der einen Seite der Erntebergungsvorrichtung in Verbindung mit der Übertragungseinrichtung erhält man mit geringem baulichen Aufwand eine vorteilhafte Regelung der Erntebergungsvorrichtung, so dass auch bei Verwendung einer Bandaufsammeleinrichtung stets eine optimale Führung des zugehörigen Bandes gewährleistet ist. Tritt beispielsweise eine Bodenunebenheit auf, so wird durch die elektro-hydraulische Regelvorrichtung erreicht, dass eine entsprechende Lageveränderung der Bandaufsammeleinrichtung erfolgt und diese stets eine annähernd horizontale Lage zur Standfläche des Mähdreschers einnimmt. Die Übertragungsvorrichtung erfasst auf einfache Weise die Relativbewegung zwischen der Bandaufsammeleinrichtung und dem Einzugsteil und führt stets eine Korrektur der Lage der Bandaufsammelvorrichtung herbei. Durch die vorteilhafte Übertragungseinrichtung können im einzelnen Sensoren und die hiermit verbundenen Übertragungsgestänge eingespart werden. Durch einen weiteren elektrischen Schalter ist es möglich, die Arbeitslage der Bandaufsammeleinrichtung auf die unterschiedliche Erntegutbeschaffenheit bzw. Lage des Erntegutes einzustellen und somit die Bandaufsammeleinrichtung auf einen bestimmten Bodenabstand zu fixieren. Lediglich bei auftretenden Bodenunebenheiten bzw. Bodenwellen wird durch die Laufräder eine Verstellung der Bandaufsammeleinrichtung herbeigeführt, die dann über die Drehschaltervorrichtung in Verbindung mit der elektrohydraulischen Regelvorrichtung korrigiert werden kann. Hierzu ist es vorteilhaft, dass der Drehschalter einen an der Übertragungseinrichtung vorgesehenen drehbaren Schaltteil aufweist und dass die mechanische Übertragungseinrichtung zur Verstellung des Schaltteiles eine den Schaltteil in eine erste Stellung verstellende Feder aufweist, wobei in der ersten Stellung sich die Übertragungseinrichtung in ihrer Arbeitsstellung zur Verschwenkung des in Abhängigkeit von der Schwenkbewegung der Aufsammeleinrichtung stehenden Schaltteiles befindet. Durch die mechanische Übertragungseinrichtung, die zwischen dem Einzugsteil und der Bandaufsammeleinrichtung wirkt, lässt sich auf einfache Weise die Relativbewegung zwischen diesen beiden Baueinheiten übertragen und somit der drehbar gelagerte Schalter verstellen, wenn dieser über die Feder in seine endgültige Arbeitsstellung verschwenkt worden ist. Die endgültige Arbeitsstellung des Schaltteiles ist erst dann erreicht, wenn eine Parallelverschwenkung, d.h. eine gleichmässige Verstellung aller Rahmenteile bzw. Seitenteile, herbeigeführt worden ist. Wird lediglich ein Seitenteil gegenüber den anderen Rahmenteilen mehr verstellt, so können der Schaltteil und die mit ihm verbundene mechanische Übertragungseinrichtung nicht ihre endgültige Arbeitsstellung einnehmen und somit kein entsprechender Schaltimpuls zur Veränderung der Höhenlage der Bandaufsammeleinrichtung ausgelöst werden. Hierzu ist es vorteilhaft, dass die mechanische Übertragungseinrichtung eine die Breite der Aufsammeleinrichtung überspannende Welle aufweist, an deren Enden je ein Hebelarm angeschlossen ist, der mit dem Rahmen des Einzugsteiles in Wirkverbindung steht und der durch seine Verschwenkung die Aufsammeleinrichtung nach oben in eine erste Stellung und durch die Feder in eine zweite Stellung verstellt.

In weiterer Ausgestaltung der Erfindung ist es vorteilhaft, dass die Welle sich zwischen den oberen und den unteren Trums der Aufsammeleinrichtung erstreckt. Vorteilhaft ist es ferner, dass der Drehschalter an der Welle angeordnet und koaxial mit ihr verschwenkbar ist. Ausserdem ist es vorteilhaft, dass die mechanische Übertragungseinrichtung zwei gelenkig mit dem Rahmen des Einzugsteiles verbundene Gestänge aufweist, wobei ein jedes Gestänge mit seinem entsprechenden oberen Ende jeweils an den entsprechenden Hebelarm der Welle angeschlossen ist, und dass die Gestänge einenends an Rahmenteile des Einzugsteiles, anderenends über die als Schlitzführung ausgebildete Spielverbindung an den entsprechenden Hebelarm angeschlossen sind. Durch die Verwendung der Schlitzführung zwischen dem Gestänge, das an dem Einzugsteil angeschlossen ist, und dem an der Welle vorgesehenen Hebelarm besteht die Möglichkeit, dass lediglich der eine Seitenteil sich gegenüber dem anderen Seitenteil verstellt, ohne dass bereits ein Schaltimpuls zur Lagerkorrigierung der Bandaufsammeleinrichtung ausgelöst wird. Erst wenn beide an der Welle endseitig vorgesehenen Hebelarme ihre Endlagestellung erreicht haben, d.h. mit ihrem entsprechenden Gelenkbolzen am Ende der Schlitzführung angelangt sind, kann ein entsprechender Steuerimpuls zur Verstellung der Bandaufsammeleinrichtung ausgelöst werden. Hierzu ist es vorteilhaft, dass zwischen dem ersten und zweiten Ausgangskontaktelement ein Zwischenraum mit einem stromlosen Kontaktelement vorgesehen ist, so dass bei Einnahme dieses Bereiches durch den Drehschalter eine schwimmende Lagerung der Aufsammeleinrichtung erfolgt, und dass die Aufsammeleinrichtung zwei parallel zueinander verlaufende, auf einer Achse einzeln oder gemeinsam verschwenkbare Seitenteile aufweist, die zumindest über eine teleskopartige, parallel zur Achse verlaufende Verbindungsvorrichtung miteinander verbunden sind. Durch die Verwendung zahlreicher Ausgangskontakte, die über das Schaltelement mit dem Eingangskontakt verbindbar sind, können bestimmte Höhenlagen für die Bandaufsammeleinrichtung angesteuert werden. Durch die Verwendung der teleskopartig ausgebildeten Verbindungsvorrichtung wird eine gute, jedoch elastische Verbindung zwischen den aussenliegenden Rahmenteilen der Bandaufsammeleinrichtung geschaffen.

In weiterer Ausgestaltung der Erfindung ist es vorteilhaft, dass die einzelnen Ausgangskontakte in einer Ebene kreisbogenartig angeordnet sind, über denen das schwenkbar angeordnete, eine Kontaktbürste aufweisende Schaltelement angeordnet ist, das eine Verbindung des Eingangskontaktelementes mit dem entsprechenden Ausgangskontaktelement herstellt, und dass der Drehschalter zur Aufnahme der Eingangs- und Ausgangskontakte und des drehbaren Schaltelementes ein an der Aussenseite des Seitenteils angeordnetes Gehäuse aufweist. Im folgenden wird die Erfindung anhand von lediglich einen Ausführungsweg darstellenden Zeichnungen näher erläutert. Es zeigt:

Fig. 1 eine Teilansicht des vorderen Endes einer Erntebergungsmaschine mit einer Erntebergungsvorrichtung,

Fig. 2 eine Teilansicht der Erntebergungsvorrichtung gemäss Fig. 1 mit der erfindungsgemässen automatischen Steuervorrichtung für die Erntebergungsvorrichtung,

Fig. 3 eine perspektivische Darstellung eines Aufsammelbandes der Erntebergungsvorrichtung,

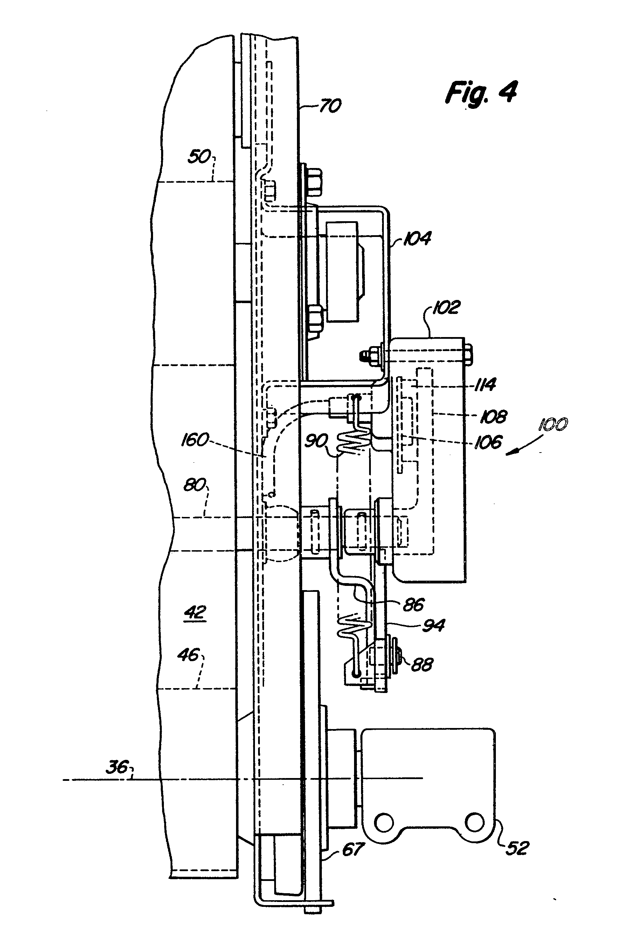

Fig. 4 eine Draufsicht der Teilansicht entlang der Linie 4 - 4 gemäss Fig. 2,

Fig. 5 einen Stromlaufplan für die Steuervorrichtung,

Fig. 6 einen dreipoligen Vier-Stellungs-Schalter zur wahlweisen Betätigung des Einsatzpunktes für die Erntebergungsvorrichtung,

Fig. 7 einen Kontrollschalter für die Steuervorrichtung.

In der Zeichnung ist mit 10 eine selbstfahrende Erntebergungsmaschine, beispielsweise ein Mähdrescher, bezeichnet, der auf hinteren und vorderen Laufrädern 12 sich abstützt und mit einer Fahrerkabine 14 ausgerüstet ist, unter der die Erntebergungsvorrichtung 16 angeschlossen ist.

Die Erntebergungsvorrichtung 16 ist mit einer Bandaufsammeleinrichtung 18 ausgerüstet, die fest mit einem Schrägfördergehäuse 20 verbunden ist, das unterhalb der Fahrerkabine 14 mittels Mähdreschers 10 angeschlossen ist. Die Vertikalverstellung der Erntebergungsvorrichtung 16 erfolgt über Hydraulikzylinder 24, die über Hydraulikleitungen an einen Hydromotor angeschlossen sind und über elektrische Schaltorgane 26 und 28 sowie eine elektro-hydraulische Steuereinrichtung 30 betätigbar sind.

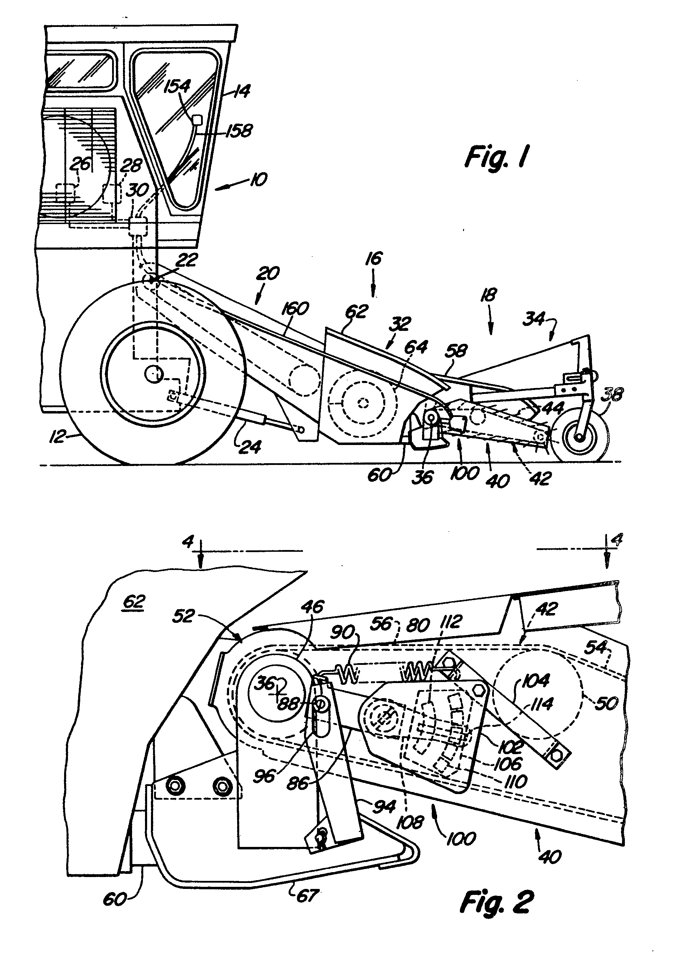

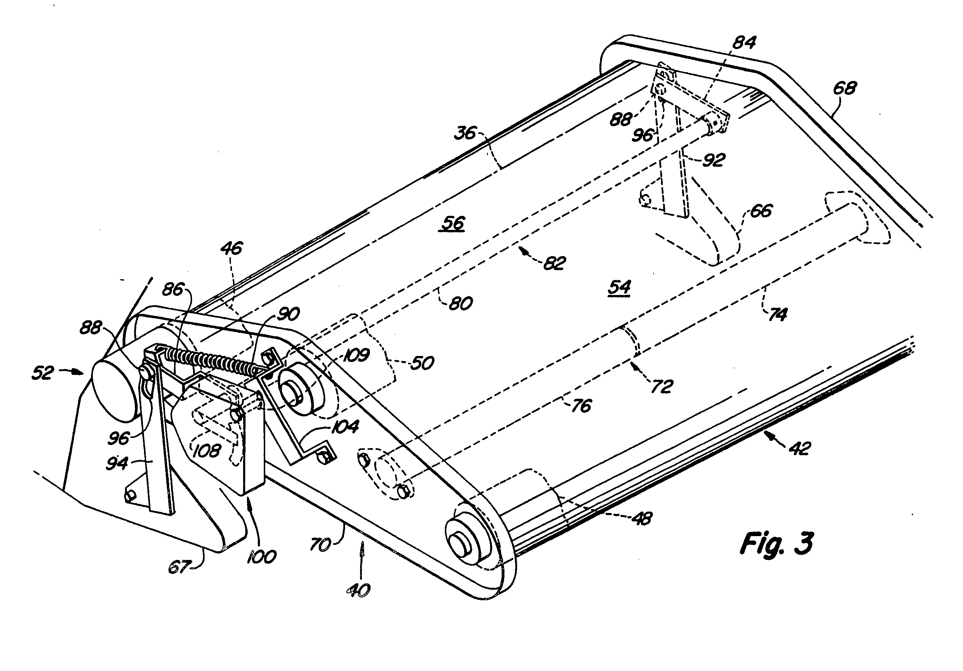

Die Bandaufsammeleinrichtung 18 ist in den Figuren 2 und 3 detailliert veranschaulicht und mit einer automatischen Lage-Steuerungs-Vorrichtung ausgerüstet. Zwischen dem Schrägfördergehäuse 20 und der Bandaufsammeleinrichtung 18 befindet sich ein Einzugsteil 32 mit einer Einzugsschnecke 64, der an das untere Ende des Schrägfördergehäuses 20 starr angeschlossen ist und die Rahmenteile 34 der schwimmend gelagerten Bandaufsammeleinrichtung 18 aufnimmt. Die Rahmenteile 34 der Bandaufsammeleinrichtung 18 können frei um eine quer verlaufende Achse 36 schwenken. Der Abstand des vorderen Endes der Bandaufsammeleinrichtung 18 zum Boden wird durch zwei Laufräder 38 gesteuert, die an einen Rahmen 40 der Bandaufsammeleinrichtung 18 angeschlossen und mit Bezug auf Fig. 1 vor dem Rahmen 40 bzw. der Bandaufsammeleinrichtung 18 angeordnet sind.

Die Bandaufsammeleinrichtung 18 weist ein Förderband 42 mit zahlreichen Fingern 44 auf (siehe Fig. 1), wobei das Förderband 42 um hintere Rollen 46, vordere Rollen 48 und eine mittlere Rolle 50 geleitet wird. Das Förderband 42 wird über einen Hydromotor 52 angetrieben, der hierzu mit der entsprechenden Rolle 46 verbunden ist, die koaxial zur Achse 36 der Bandaufsammeleinrichtung 18 verläuft. Der obere Trum des Förderbandes 42 dient zur Aufnahme und zum Weitertransport des aufgenommenen Erntegutes, wobei der entsprechende Teil des Trums 54 mit Bezug auf die Förderrichtung des Erntegutes auf einer ansteigenden Ebene liegt, während der Teil 56 des Trums auf einer nach unten geneigt verlaufenden Ebene liegt. Die Rolle 50 unterstützt den oberen Trum 54 und liegt in der Knickstelle der beiden Teile des oberen Trums. Abdeckteile 58, die oberhalb des Förderbandes 42 vorgesehen sind, dienen dazu, das Erntegut auf dem Förderband zu halten und die Förderung zum Einzugsteil 32 zu unterstützen. Der Einzugsteil 32 weist einen Rahmen 60 auf, an dem zwei gegenüberliegende Seitenteile 62 (siehe Fig. 1 und 2) angeschlossen sind. Die Seitenteile 62 dienen zur Aufnahme der Einzugsschnecke 64, die das vom Förderband 42 abgegebene Erntegut zusammenzieht und es zu dem Schrägfördergehäuse 20 und somit in das Innere des Mähdreschers leitet. An dem Rahmen 60 sind ferner beiderseits Kufen 66 und 67 angeschlossen, die sich von dem Rahmen 60 nach vorne erstrecken. Sie dienen zur Verschwenkung der Erntebergungsvorrichtung 16, zur Abstützung des Rahmenteiles 34 und gewährleisten eine Mindesthöhe des Einzugsteiles 32 zum Boden.

Um eine wirkungsvolle Erntebergung zu ermöglichen, ist die Lage der Erntebergungsvorrichtung 16, insbesondere des vorderen Endes des Förderbandes 42 mit der vorderen Rolle 48, sowie eine parallele Ausrichtung des vorderen Endes zum Boden hin besonders wichtig. Das hintere Ende des Förderbandes bzw. die zugehörigen Rahmenteile 34 sind starr an den Einzugsteil angeschlossen. Jedoch ist eine Verstellung der vorderen Rolle 48 bzw. eine Querneigung der vorderen Rolle 48 mit Bezug auf die hintere Rolle 46 möglich. Hierzu ist der Rahmenteil 34 flexibel ausgebildet. Die Seitenteile 68 und 70 des Rahmenteils 34 sind über eine Verbindungsvorrichtung 72 miteinander verbunden. Die Verbindungsvorrichtung 72 besteht aus zwei Teleskopteilen 74 und 76, die um eine horizontal verlaufende Lächsachse drehbar sind. Hierdurch wird eine Torsionsbewegung möglich, so dass die Seitenteile 68 und 70 gegeneinander verschwenkt werden können.

In Fig. 3 ist die automatische Steuervorrichtung näher dargestellt, wozu eine Welle 80 einer Sensoreinrichtung 82 gehört, die sich zwischen dem oberen und dem unteren Trum des Förderbandes 42 erstreckt und in den Seitenteilen 68 und 70 aufgenommen ist. Die sich nach hinten erstreckenden Hebelarme 84 und 86 sind links und rechts an die Welle 80 ausserhalb der Seitenteile 68 und 70 angeschlossen. Ein jeder Hebelarm 84 und 86 weist je einen Lagerzapfen 88 auf, an den je ein Gestänge 92 und 94 angeschlossen ist. Eine Feder 90 ist einenends an den Hebelarm 86 ausserhalb des Seitenteils 70 angeschlossen und spannt die Sensoreinrichtung 82 mit Bezug auf Fig. 3 im Uhrzeigerdrehsinn vor. Eingangsimpulse an der Sensoreinrichtung 82 geben die Schwenk- bzw. Drehbewegung der Rahmenteile 34 an. Diese Bewegungsimpulse werden über die Gestänge 92 und 94 geleitet, die hierzu an die Kufen 66 und 67 und über den Lagerzapfen 88 an die Hebelarme 84 und 86 angeschlossen sind. Ein entsprechend langer Schlitz 96 ist in den oberen Enden der Gestänge 92 und 94 vorgesehen, der Teil einer Spielverbindung zwischen dem Lagerzapfen 88 und der Welle 80 der Sensoreinrichtung 82 ist.

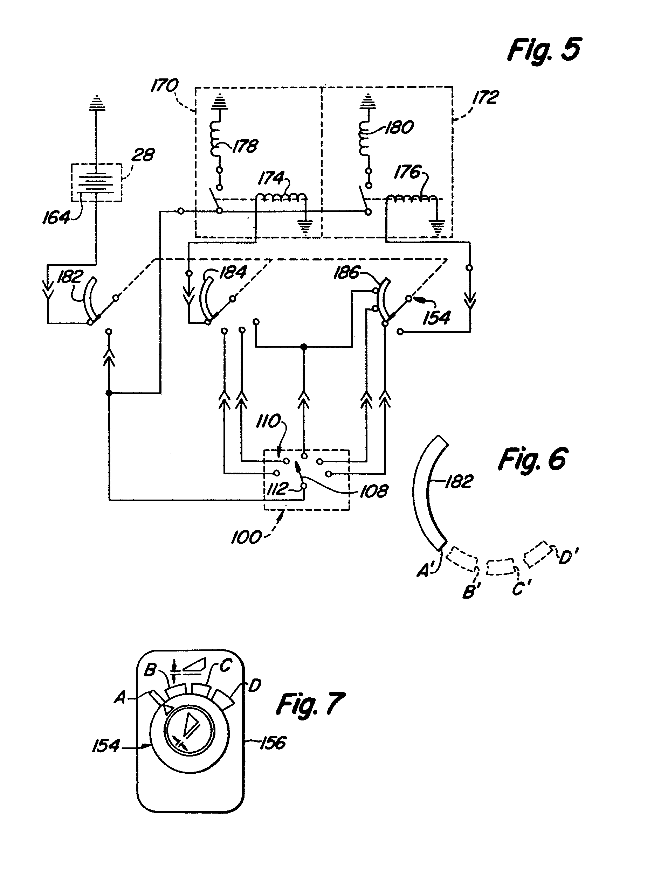

Die Welle 80 steht mit einer Schaltvorrichtung 100 in Wirkverbindung, die am rechten Ende der Welle 80 vorgesehen ist. Die Schaltvorrichtung 100 ist gegenüber dem Rahmenteil 34 gegen Drehen gesichert und weist hierzu einen Gehäuseteil 102 auf, der an einer mit dem Seitenteil 70 verbundenen Halterung 104 angeschlossen ist. An der Innenseite des Gehäuses 102 ist ein elektrisches Schaltpaneel 106 angeordnet, an dem ein schwenkbares Schaltelement 108 vorbeistreicht, das an die Welle 80 fest angeschlossen ist. Das Schaltpaneel 106 weist auf einem Kreisbogen angeordnete Schaltkontakte 110 auf, denen ein einzelnes Eingangsschaltelement 112 zugeordnet ist. Die Ein- und Ausgänge der Schaltkontakte 110 und des Eingangsschaltteiles 112 sind über eine Bürsteneinrichtung 114 verbunden, die auf dem Schaltelement 108 angeordnet ist. Die Verbindung des Gehäuses 102 mit der Halterung 104 erfolgt über einen Bolzen, der in einer Schlitzführung 109 aufgenommen ist, so dass eine Schwenkbewegung möglich ist. Diese Verstellmöglichkeit dient dazu, Fertigungsungenauigkeiten auszugleichen. Die Lageeinstellung des Rahmenteiles 34 mit Bezug auf den Einzugsteil 32 wird von der Fahrerkabine 14 aus über einen Schalter 154 gesteuert, der als dreipoliger Vier-Stellungs-Schalter ausgebildet ist. Die Schaltstellungen werden gemäss Fig. 7 durch eine Skala 156 angedeutet. Der Schalter 154 ist mit der elektro-hydraulischen Steuereinrichtung 30 über elektrische Leitungen 158 verbunden. Eine zweite Kabelverbindung dient zum Anschluss der elektro-hydraulischen Steuereinrichtung 30 an die Schaltvorrichtung 100.

In Fig. 5 ist ein Stromlaufplan für die automatische Höhen- und Lagesteuervorrichtung der Erntebergungsvorrichtung 16 mit Bezug auf den Rahmenteil 34 gegenüber dem Einzugsteil 32 veranschaulicht. In dem Stromlaufplan ist eine Kraftwelle 28 wiedergegeben, zu der beispielsweise eine Batterie 164 gehören kann, die Teil der elektro-hydraulischen Steuereinrichtung 30 ist, zu der ein Schaltkreis 170 zum Anheben und ein Schaltkreis 172 zum Absenken der Erntebergungsvorrichtung gehört. Bei entsprechender elektrischer Beaufschlagung der Hydraulikzylinder 24 wird die Erntebergungsvorrichtung 16 angehoben bzw. abgesenkt. Zu den Schaltkreisen 170 und 172 zum Anheben bzw. Absenken der Erntebergungsvorrichtung 16 gehören Schaltrelais 174 (Anheben) und 176 (Absenken) sowie eine Spule 178 (Anheben) bzw. eine Spule 180 (Absenken). Wie aus Fig. 7 hervorgeht, weist der Schalter 154 eine Aus-Stellung A und drei Bedienungsstellungen B, C und D auf, die einer bestimmten Position der Erntebergungsvorrichtung entsprechen. Der in Fig. 5 schematisch dargestellte Schalter 154 ist auseinandergezogen und besteht aus drei koaxial zueinander angeordneten Schaltkontakten 182, 184 und 186 (ein jeder Schaltkontakt entspricht einem Pol des Schalters). Die relative Stellung eines jeden Schaltsegmentes entspricht den vier Schaltpositionen A, B, C und D, wie sie in Fig. 6 angedeutet sind. Die elektrische Funktion der Schaltvorrichtung 100 ergibt sich aus dem Stromkreislauf gemäss Fig. 5.

Im Arbeitseinsatz und somit bei Fahrten des Mähdreschers über das Feld hat die Bedienungsperson den Schalter 154 für eine entsprechende Arbeitshöhe einzustellen. Danach wird über die einzelnen Steuerlemente die Erntebergungsvorrichtung 16 manuell in die entsprechende Höhenlage gebracht, wobei die Höhe des vorderen Endes des Rahmenteiles 34 durch die Laufräder 38 gesteuert wird, so dass die Rahmenteile 34 mit Bezug auf den Einzugsteil 32 die gewünschte Lage einnehmen und dann eine automatische Höhenregelung bzw. Höhenkontrolle erfolgt. Nachdem die entsprechende Einstellung der Erntebergungsvorrichtung 16 vorgenommen worden ist, kann die Bedienungsperson den Schalter 154 loslassen und das automatische Steuersystem die Höhenlagensteuerung übernehmen. Wie aus den Zeichnungen hervorgeht, ist das Schaltelement 108 direkt mit der Welle 80 verbunden, die jeweils auf die entsprechende Höhe des Rahmenteiles 34 anspricht und dadurch die Bürsteneinrichtung 114 mit Bezug auf die einzelnen Kontakte der Schaltpaneele 106 verstellt und entsprechende Steuerimpulse «Anheben» bzw. «Absenken» auslöst und somit die Erntebergungsvorrichtung 16 in die gewünschte Arbeitsposition bringt.

Die Abmessungen und die Abstände der Schaltkontakte 110 sowie die Abmessungen der Bürsteneinrichtung 114 sind so gewählt, dass die Bürsteneinrichtung 114 über den Kontakten angeordnet werden kann, wobei gleichzeitig eine einwandfreie Funktion in der Schaltanordnung gewährleistet bleibt. Die Anzahl bzw. die Abstände der einzelnen Kontakte kann entsprechend verändert bzw. so gewählt werden, um den Anwendungsbereich zur Höheneinstellung der Erntebergungsvorrichtung 16 entsprechend zu variieren. Im Ausführungsbeispiel sind fünf Ausgangskontakte und ein Wahlschalter vorgesehen, die drei Arbeitsstellungen für die Erntebergungsvorrichtung 16 ermöglichen. In diesem System sind die einzelnen Kontakte individuell an die einzelnen Schaltkreise 170 und 172 anschliessbar, und zwar in der Weise, dass sie den entsprechenden Schaltstellungen des Schalters 154 in der Fahrerkabine 14 entsprechen. Der beschriebene Schaltkreis entspricht Endkontakten, wobei die Schaltkreise 170 und 172 lediglich für Anheben bzw. Absenken zuständig sind. Die drei dazwischenliegenden Ausgänge können entweder mit dem Schaltkreis 170 (Anheben) oder dem Schaltkreis 172 (Absenken) verbunden werden. Ferner können sie an eine Null-Leitung angeschlossen werden, in der kein Schaltvorgang ausgelöst wird. Sind die einzelnen Kontakte bzw. die Bürsteneinrichtung nicht an die Schaltkreise 170 und 172 angeschlossen, so kann in diesem Falle die Erntebergungsvorrichtung bzw. der Rahmenteil 34 sich frei nach oben und unten bewegen, ohne dass ein entsprechender Schaltimpuls «Anheben» bzw. «Absenken» für die Erntebergungsvorrichtung 16 (Schrägfördergehäuse mit Einzugsteil 32) erfolgt.

Eine effektive Aufsammelung bzw. Erntung des Erntegutes hängt von dem korrekten Zug des Förderbandes 42 ab. Durch Anheben der Erntebergungsvorrichtung und hiermit des Einzugsteiles 32 verschwenkt der Rahmenteil 34 um seine Achse 36 nach unten. Dadurch wird der Steigungswinkel des Förderbandes bzw. des oberen Trums vergrössert, während durch Absenken der Erntebergungsvorrichtung dieser verringert wird. Bei normalen Arbeitsbedingungen, wenn das Erntegut bzw. die zugehörigen Ähren oben auf den Halmen aufliegen und keine Bodenberührung haben, wird eine gute Erntebergung dann erreicht, wenn der hintere Teil 56 des oberen Trums 54 eine annähernd horizontale Lage einnimmt bzw. parallel zur Standfläche des Mähdreschers ausgerichtet ist. Bei anderen Erntebedingungen bzw. Bodenverhältnissen ist es wünschenswert, die Neigung des oberen Trums grösser oder kleiner zu wählen; beispielsweise bei sehr schlechten Erntebedingungen oder flachem Schwad, wobei die Ähren zwischen den einzelnen Halmen liegen, ist eine erhöhte Steigung des Trums 54 notwendig. Bei felsigem bzw. unebenem Boden ist eine stärkere Steigung des Trums deshalb vorteilhaft, weil dadurch Steine nicht über den vorderen Teil des Trums 54 der Einzugsschnecke 64 zugeführt werden, da diese von dem Trum zurückrollen. Im Ausführungsbeispiel entspricht die Stelle C des Schalters 154 der normalen Arbeitsstellung der Erntebergungsvorrichtung bzw. des Förderbandes 42. Mit der Stellung B und D ist eine geringe Neigung bzw. eine starke Neigung des Förderbandes 42 eingestellt.

Die automatische Regel- bzw. Steuervorrichtung arbeitet auch dann wirkungsvoll, wenn der Mähdrescher auf unebenem Gelände arbeitet, da eine Verdrehung bzw. Torsionsverdrehung der Rahmenteile 34 möglich ist. Wie aus Fig. 3 hervorgeht, kann bei unebenem Gelände der linke Seitenteil 68 stärker abgesenkt werden als der rechte Seitenteil 70. Die Feder 90 zwingt die Hebelarme 84 und 86 nach oben, so dass der Lagerzapfen 88 des rechten Hebelarmes 86 von dem oberen Ende der Schlitzführung 96 des linken Gestänges 94 wegbewegt wird. Die relative Abwärtsbewegung des linken Seitenteiles 68 bewirkt eine vertikale Verschiebung des linken Hebelarmes 84, so dass der linke Lagerzapfen 88 sich von dem oberen Ende der Schlitzführung 96 des Gestänges 92 wegbewegt. Jedoch wird hierdurch keine relative Drehbewegung der Sensoreinrichtung 82 für den rechten Seitenteil 70 herbeigeführt und kein Impuls für Senken an der elektro-hydraulischen Steuereinrichtung 30 ausgelöst. Senkt sich jedoch auch das rechte Ende der Erntebergungsvorrichtung 16 ab, so fällt auch der rechte Hebelarm 86 mit Bezug auf das Gestänge 94 nach unten, so dass die Welle 80 (durch die Wirkung der Feder 90) sich im Uhrzeigerdrehsinn drehen kann, und somit das Schaltelement 108 der Schaltvorrichtung 100, das dann einen Schaltimpuls für Senken auslöst. Die Spielverbindung in der Steuervorrichtung stellt sicher, dass kein Stellimpuls für Senken erfolgt, solange nicht beide Seitenteile 68 und 70 den gleichen Abstand zur Bodenoberfläche bzw. Mähdreschers aufweisen bzw. sich nach unten bewegen. Somit ergibt sich, dass bei Parallelverlauf der vorderen Rolle 48 zur hinteren Rolle 46 und bei Aufhebung des Spiels nach oben für die beiden Gestänge 92 und 94 eine Aufwärtsverstellung von der einen bzw. der anderen Seite der Bandaufsammeleinrichtung 18 eine Verstellung der Sensoreinrichtung 82 im entgegengesetzten Uhrzeigerdrehsinn bewirkt, so dass ein elektrischer Schaltimpuls für Anheben ausgelöst wird.

Aus Vorstehendem geht hervor, dass durch die kompakte und einfache Ausbildung der Sensoreinrichtung 82 in Verbindung mit einer mechanischen Stellvorrichtung gewährleistet wird, dass das Förderband 42 im Arbeitseinsatz stets parallel zur Bodenoberfläche ausgerichtet werden kann und bei unebener Bodenoberfläche den Konturen der Bodenoberfläche folgen kann. Durch die Spielverbindung zwischen der Welle 80 und den Rahmenteilen der Erntebergungsvorrichtung 16 wird bei einer Aufwärtsverstellung der einen oder anderen Seite der Bandaufsammeleinrichtung 18 ein Schaltimpuls für Aufwärtsverstellung ausgelöst, während eine Abwärtsbewegung beider Seiten der Bandaufsammeleinrichtung 18 einen Schaltimpuls für Abwärtsverstellung auslöst. Die an die Welle 80 angeschlossenen Gestänge 92, 94 bewirken also nur eine Verstellung der Welle und somit der Schaltvorrichtung 100 für Aufwärtsverstellung, während die Feder 90 die Welle 80 nur für den Absenkimpuls verstellt.

**Patentansprüche**

1. Regelvorrichtung für die Erntebergungsvorrichtung (16) einer Erntemaschine, mit einer einen elektrisch steuerbaren Hubteil und einen elektrisch steuerbaren Absenkteil (Schaltteil 170, 172) aufweisenden Stellvorrichtung zur Verschwenkung der Erntebergungsvorrichtung (16), die mit einer Aufsammeleinrichtung (18) und einem Einzugsteil (32) ausgerüstet ist, an dem die über Laufräder (38) auf dem Boden abstützende Aufsammeleinrichtung (18) mit ihrem nachlaufenden Ende über eine quer verlaufende Achse an das vordere Ende des Einzugsteiles (32) gelenkig und höhenverschwenkbar angeschlossen ist, wobei die Seitenteile (70) der Aufsammeleinrichtung (18) torsionsartig verdrehbar ausgebildet sind und hierzu zwischen ihnen und dem Einzugsteil (32) mindestens ein elektrischer, über Bodenberührungsglieder (67) des Einzugsteiles (32) betätigbarer Drehschalter (100) als Stellvorrichtung vorgesehen ist, über den Schaltimpulse an die elektro-hydraulisch betätigbare Steuereinrichtung (30, Hydraulikzylinder 24) zur Lageveränderung des Einzugsteiles gegenüber der Aufsammeleinrichtung (18) geleitet werden, und wobei der Drehschalter (100) einen an eine Stromversorgungseinrichtung anschliessbaren Eingangskontakt (112) und mehrere mit Abstand zueinander angeordnete, mit den Hub- und Absenkteilen (Schaltteil 170, 172) in Wirkverbindung bringbare Ausgangskontakte (110) aufweist, dadurch gekennzeichnet, dass der Drehschalter (100) auf der einen Seite der Erntebergungsvorrichtung angeordnet ist, über eine erste Spielverbindung (88, 96) direkt mit den auf der einen Seite der Erntebergungsvorrichtung angeordneten Bodenberührungsgliedern (67) und über eine mechanische Übertragungsvorrichtung (80) sowie eine zweite Spielverbindung (88, 96) mit den auf der anderen Seite der Erntebergungsvorrichtung vorgesehenen Bodenberührungsgliedern (66) verbunden ist.

2. Regelvorrichtung nach Anspruch 1, dadurch gekennzeichnet, dass der Drehschalter (100) einen an der Übertragungseinrichtung (80) vorgesehenen drehbaren Schaltteil (108) aufweist und dass die mechanische Übertragungseinrichtung (Gestänge 92, 94) zur Verstellung des Schaltteiles (108) eine den Schaltteil (108) in eine erste Stellung verstellende Feder (90) aufweist, wobei in der ersten Stellung sich die Übertragungseinrichtung (Gestänge 92, 94) in ihrer Arbeitsstellung zur Verschwenkung des in Abhängigkeit von der Schwenkbewegung der Aufsammeleinrichtung (18) stehenden Schaltteiles (108) befindet.

3. Regelvorrichtung nach den Ansprüchen 1 und 2, dadurch gekennzeichnet, dass die mechanische Übertragungseinrichtung eine die Breite der Aufsammeleinrichtung (18) überspannende Welle (80) aufweist, an deren Enden je ein Hebelarm (84, 86) angeschlossen ist, der mit dem Rahmen des Einzugsteils (32) in Wirkverbindung steht und der durch seine Verschwenkung die Aufsammeleinrichtung (18) nach oben in eine erste Stellung und durch die Feder (90) in eine zweite Stellung verstellt.

4. Regelvorrichtung nach Anspruch 3, dadurch gekennzeichnet, dass die Welle (80) sich zwischen den oberen und den unteren Trums der Aufsammeleinrichtung (18) erstreckt.

5. Regelvorrichtung nach den Ansprüchen 1 bis 3, dadurch gekennzeichnet, dass der Drehschalter (100) an der Welle (80) angeordnet und koaxial mit ihr verschwenkbar ist.

6. Regelvorrichtung nach einem oder mehreren der vorhergehenden Ansprüche 3-5, dadurch gekennzeichnet, dass die mechanische Übertragungseinrichtung zwei gelenkig mit dem Rahmen des Einzugsteiles (32) verbundene Gestänge (92, 94) aufweist, wobei ein jedes Gestänge mit seinem entsprechenden oberen Ende jeweils an den entsprechenden Hebelarm (84), 86) der Welle (80) angeschlossen ist.

7. Regelvorrichtung nach Anspruch 6, dadurch gekennzeichnet, dass die Gestänge (92, 94) einenends an Rahmenteile des Einzugsteils (32), anderenends über die als Schlitzführung (96) ausgebildete Spielverbindung an den entsprechenden Hebelarm (84, 86) angeschlossen sind.

8. Regelvorrichtung nach einem oder mehreren der vorhergehenden Ansprüche, dadurch gekennzeichnet, dass zwischen dem ersten und zweiten Ausgangskontaktelement (110) ein Zwischenraum mit einem stromlosen Kontaktelement vorgesehen ist, so dass bei Einnahme dieses Bereiches durch den Drehschalter (100) eine schwimmende Lagerung der Aufsammeleinrichtung (18) erfolgt.

9. Regelvorrichtung nach einem oder mehreren der vorhergehenden Ansprüche, dadurch gekennzeichnet, dass die Aufsammeleinrichtung (18) zwei parallel zueinander verlaufende, auf einer Achse (36) einzeln oder gemeinsam verschwenkbare Seitenteile (68, 70) aufweist, die zumindest über eine teleskopartige, parallel zur Achse (36) verlaufende Verbindungsvorrichtung miteinander verbunden sind.

10. Regelvorrichtung nach einem oder mehreren der vorhergehenden Ansprüche, dadurch gekennzeichnet, dass die einzelnen Ausgangskontakte (110) in einer Ebene kreisbogenartig angeordnet sind, über denen das schwenkbar angeordnete, eine Kontaktbürste aufweisende Schaltelement (108) angeordnet ist, das eine Verbindung des Eingangskontaktelementes (112) mit dem entsprechenden Ausgangskontaktelement (110) herstellt.

11. Regelvorrichtung nach einem oder mehreren der vorhergehenden Ansprüche, dadurch gekennzeichnet, dass der Drehschalter (100) zur Aufnahme der Eingangs- und Ausgangskontakte (112, 110) und des drehbaren Schaltelementes (108) ein an der Aussenseite des Seitenteils (70) angeordnetes Gehäuse (102) aufweist.

## Claims

1. Control device for the crop-gathering unit (16) of a harvesting machine, having a positioning device comprising an electrically controllable raising part and an electrically controllable lowering part (switch part 170, 172), for pivoting of the crop-gathering unit (16), which is fitted with a collector device (18) and a feeder part (32), to which the collector device (18) bearing on the ground with running wheels is connected at its following end by way of a transversely extending axle hingedly and vertically pivotally to the front end of the feeder part (32), wherein the side parts (70) of the collector device (18) are constructed so as to be torsionally rotatable, and hereto there is provided between them and the feeder part (32) as positioning device at least one electrical rotary switch (100) operable by ground-contacting members (67) of the feeder part (32) from which switch switching pulses are conveyed to the electro-hydraulically operable actuator (30, hydraulic cylinder 24) for positional adjustment of the feeder part relative to the collector device (18), and wherein the rotary switching (100) has an input contact (112) connectable to a current supply device and a plurality of output contacts (110) spaced relative to each other, which can be brought into operative connection with the raising and lowering parts (switch part 170, 172), characterised in that the rotary switch (100) is arranged on one side of the crop-gathering unit and is connected, through a first lost-motion connection (88, 96), directly with the ground-contacting members (67) arranged on the one side of the crop-gathering unit and, through a mechanical transmission device (80) as well as a second lost-motion connection (88, 96), with the ground-contacting members (66) provided on the other side of the crop-gathering unit.

2. Control device according to claim 1, characterised in that the rotary switch (100) has a rotatable switch part (108) provided on the transmission device (80) and in that the mechanical transmission device (link 92, 94) for operating the switch part (108), has a spring (90) which sets said switch part (108) into a first position, wherein in the first position the transmission device (link 92, 94) is in its working position for pivoting the switch part (108) in dependence upon the pivotal movement of the collector device (18).

3. Control device according to claims 1 and 2, characterised in that the mechanical transmission device comprises a shaft (80) extending over the whole width of the collector device (18), on each of whose ends a lever arm (84, 86) is connected, which is in operative connection with the frame of the feeder part (32) and which, by its pivotal movement, brings the collector device (18) upwards into a first position and, by means of the spring (90) into a second position.

4. Control device according to claim 3, characterised in that the shaft (80) extends between the upper and the lower runs of the collector device (18).

5. Control device according to claims 1 to 3, characterised in that the rotary switch (100) is arranged on the shaft (80) and is coaxially pivotable therewith.

6. Control device according to one or more of the preceding claims 3 to 5, characterised in that the mechanical transmission device has two links (92, 94) articulated to the frame of the feeder part (32), where each link, with its corresponding upper end, is connected to the corresponding lever arm (84, 86) of the shaft (80).

7. Control device according to claim 6, characterised in that the links (92, 94) are connected at one end to frame parts of the feeder part (32) and at the other end by means of the lost motion connection formed as guide slot (96), to the corresponding lever arm (84, 86).

8. Control device according to one or more of the preceding claims, characterised in that between the first and second output contact element (110) there is provided an interval with a currentless contact element, so that when the rotary switch (100) occupies this region, a floating support of the collector device (18) results.

9. A control device according to one or more of the preceding claims, characterised in that the collector device (18) has two side parts (68, 70) extending parallel to one another, pivotable singly or together about an axis (36), which parts are connected together at least through a telescope-like connecting device extending parallel to the axis (36).

10. Control device according to one or more of the preceding claims, characterised in that the individual output contacts (110) are arranged in a plane along a circular arc, above which there is arranged the pivotally arranged switch element (108) comprising a contact brush, which element establishes a connection of the input contact element (112) with the corresponding output contact element (110).

11. Control device according to one or more of the preceding claims, characterised in that the rotary switch (100) has a housing (102) arranged on the exterior of the side part (70) for accommodating the input and output contacts (112, 110) and the rotatable switch element (108).

**Revendications**

1. Dispositif de réglage pour l'ensemble de récolte (16) d'une machine de récolte, comportant un dispositif de positionnement comprenant une partie de relevage et une partie d'abaissement (parties de commutation 170, 172) pouvant être commandées électriquement, pour provoquer le pivotement de l'ensemble de récolte (16), qui comporte un dispositif ramasseur (18) et une section d'amenée (32) à laquelle le dispositif ramasseur (18) s'appuyant sur le sol par des roues porteuses (38) est par son extrémité aval relié en étant articulé à l'extrémité antérieure de ladite section d'amenée (32) et avec la possibilité de pivotement en hauteur par l'intermédiaire d'un axe dirigé transversalement les éléments latéraux (70) du dispositif ramasseur (18) étant réalisés de façon à pouvoir subir un pivotement à effet de torsion, et au moins un commutateur électrique rotatif (100) étant prévu à cet effet entre ces éléments et la section d'amenée (32), en tant que dispositif de positionnement, ce commutateur pouvant être manœuvré par l'intermédiaire d'éléments de contact avec le sol (67) de la section d'amenée (32) et transmettant des impulsions de commutation au dispositif de commande à actionnement électro-hydraulique (30, vérins hydrauliques 24) pour modifier la position de la section d'amenée par rapport au dispositif ramasseur (18), et le commutateur rotatif (100) comportant un còntact d'entrée (112) pouvant être connecté à un dispositif d'alimentation en courant et plusieurs contacts de sortie (110) écartés les uns des autres et pouvant être reliés fonctionnellement aux parties de relevage et d'abaissement (parties de commutation 170, 172) caractérisé en ce que le commutateur rotatif (100) est placé d'un côté de l'ensemble de récolte, est relié par une première liaison à jeu (88, 96) directement aux éléments de contact avec le sol (67) placés d'un côté de l'ensemble de récolte et, par un dispositif de transmission mécanique (80), ainsi qu'une seconde liaison à jeu (88, 96), aux éléments de contact avec le sol (66) prévus de l'autre côté de l'ensemble de récolte.

2. Dispositif de réglage selon la revendication 1, caractérisé en ce que le commutateur rotatif (100) comporte un élément de commutation rotatif (108) prévu sur le dispositif de transmission (80) et en ce que le dispositif de transmission mécanique (tringlerie 92, 94) servant au déplacement de l'élément de commutation (108) comporte un ressort (90) amenant l'élément de commutation (108) dans une première position, le dispositif de transmission mécanique (tringlerie 92, 94) se trouvant, dans la première position, dans sa position de travail pour le pivotement de l'élément de commutation (108) soumis à l'effet du mouvement de pivotement du dispositif ramasseur (18).

3. Dispositif de réglage selon les revendications 1 et 2, caractérisé en ce que le dispositif de transmission mécanique comporte un arbre (80) s'étendant sur la largeur du dispositif ramasseur (18) à chacune des extrémités duquel est raccordé un bras de levier respectif (84, 86) qui est relié fonctionnellement au châssis de l'ensemble de récolte (16), et qui déplace par son pivotement le dispositif ramasseur (18) vers le haut jusque dans une première position et, sous l'effet du ressort (90), jusque dans une seconde position.

4. Dispositif de réglage selon la revendication 3, caractérisé en ce que l'arbre (80) s'étend entre les brins supérieurs et inférieurs du dispositif ramasseur (18).

5. Dispositif de réglage selon les revendications 1 à 3, caractérisé en ce que le commutateur rotatif (100) est placé sur l'arbre (80) et peut pivoter coaxialement avec lui.

6. Dispositif de réglage selon une ou plusieurs des revendications 3 à 5 précédentes, caractérisé en ce que le dispositif de transmission mécanique comprend deux tringles (92, 94) reliées en étant articulées au châssis de la section d'amenée (32) chaque tringle étant reliée par son extrémité supérieure correspondante au bras de levier correspondant respectif (84, 86) de l'arbre (80).

7. Dispositif de réglage selon la revendication 6, caractérisé en ce que les tringles (92, 94) sont reliées par une extrémité à des membrures de châssis de l'ensemble de récolte (16) et par leur autre extrémité au bras de levier correspondant (84, 86) par l'intermédiaire d'une liaison à jeu réalisée sous la forme d'un dispositif de guidage par fente (96).

8. Dispositif selon une ou plusieurs des revendications précédentes, caractérisé en ce qu'il est prévu, entre le premier et second éléments de contact de sortie (110), un intervalle associé à un élément de contact mort, de sorte que, lorsque le commutateur rotatif (100) occupe cette zone, il s'ensuit un montage flottant du dispositif ramasseur (18).

9. Dispositif de réglage selon une ou plusieurs des revendications précédentes, caractérisé en ce que le dispositif ramasseur (18) comporte deux éléments latéraux (68, 70) s'étendant parallèlement l'un à l'autre, pouvant pivoter individuellement ou conjointement sur un axe (36), ces éléments étant reliés entre eux au moins par l'intermédiaire d'un dispositif de liaison télescopique s'étendant parallèlement à l'axe (36).

10. Dispositif de réglage selon une ou plusieurs des revendications précédentes, caractérisé en ce que les contacts de sortie individuels (110) sont disposés en arc de cercle dans un même plan, l'élément de commutation (108) monté de façon pivotante et comportant un balai de contact étant disposé au-dessus de ces contacts de sortie et établissant une connexion entre l'élément de contact d'entrée (112) et l'élément de contact de sortie (110) correspondant.

11. Dispositif de réglage selon une ou plusieurs des revendications précédentes, caractérisé en ce que le commutateur rotatif (100) comporte, pour la réception des contacts d'entrée et de sortie (112, 110) et de l'élément de commutation rotatif (108), un boîtier (102) disposé sur la face extérieure de l'élément latéral (70).

0 133 886

Fig. 1

Fig. 2

11

Fig. 3

Fig. 4

0 133 886

15

Fig. 5

Fig. 6

Fig. 7